# EUROPEAN PATENT APPLICATION

(11) **EP 4 671 503 A1**
(43) Date of publication of application: **31.12.2025**
(21) Application number: 25184938.6
(22) Date of filing: 24.06.2025
(51) Int. Cl.: F01D 25/18, F01D 25/20

(54) **OIL SYSTEM BREATHER CONFIGURATION TO CAPTURE OIL EMISSIONS**

(30) Priority: 24.06.2024 US 202418751501
(71) Applicant: RTX Corporation, Farmington, CT 06032 (US)
(72) Inventor: JAMES, Denman H., Farmington, 06032 (US); WINTER, Michael, Farmington, 06032 (US)
(74) Representative: Dehns

(57) **Abstract**

An aircraft propulsion system (20) includes at least one bearing system (38) that includes a bearing member (78) that supports rotation of the engine shaft (84). The bearing member (78) is disposed within a bearing chamber (76) and receives lubricant (66). An air seal (80) controls a leakage flow (72) into the bearing chamber (76) and a breather air collection system (64) cleans air exhausted from the bearing chamber (76). The breather air collection system (64) including a deoiler (94) for removing entrained lubricant from the air.

## Description

### TECHNICAL FIELD

The present disclosure relates generally to an oil emission capture system for an aircraft turbine engine.

### BACKGROUND

An aircraft turbine engine generates a high energy exhaust gas flow by mixing and igniting a fuel air mixture that is than expanded through a turbine section to generate shaft power. Turbine engines use oil for cooling and lubrication of mechanical components, including bearings, gears, and seals. Oil may leak or be otherwise lost from the system during operation as the engine vents air that has passed through oil wetted areas. Some oil may be collected and removed from the air flow prior to being exhausted into the ambient environment. Minimizing any loss of oil provides improved engine performance and reduces impact on the surrounding environment.

Turbine engine manufacturers continue to seek further improvements to engine performance including improvements to thermal, transfer and propulsive efficiencies.

### SUMMARY

An aircraft propulsion system according to an exemplary embodiment of this disclosure, among other possible things includes a compressor section, a combustor and a turbine section that are arranged along an axis and define a core flow path where a compressed inlet airflow from the compressor section is mixed with fuel in the combustor and ignited to generate an exhaust gas flow that is expanded through the turbine section to drive at least one engine shaft that is rotatable about the axis, at least one bearing system that includes a bearing member that supports rotation of the engine shaft, a bearing chamber that defines an enclosed space around the bearing member to which a lubricant is communicated for lubricating the bearing member, at least one air seal that controls a leakage flow into the bearing chamber, the air seal includes a carbon seal in sealing contact with the rotating engine shaft, and a breather air collection system that is in communication with the enclosed space of the bearing chamber. The breather air collection system includes a deoiler for removing entrained lubricant from the air.

In a further embodiment of the foregoing, the aircraft propulsion system further includes an oil scavenge system where lubricant from the bearing system is gathered and communicated to a lubricant tank. The oil scavenge system includes a lubricant pump for pumping lubricant that is drained from the bearing system.

In a further embodiment of any of the foregoing aircraft propulsion systems, the air seals comprise a low airflow seal that includes a static element that contacts a rotating element.

In a further embodiment of any of the foregoing aircraft propulsion systems, the breather air collection system further includes at least one breather passage for communicating collected breather air from the bearing chambers to the core flow path.

In a further embodiment of any of the foregoing aircraft propulsion systems, the breather air collection system further includes a breather pump that is in communication with the deoiler for communicating oil that is collected in the deoiler to an oil capture device.

In a further embodiment of any of the foregoing aircraft propulsion systems, the breather pump is configured to generate a vacuum to provide a negative pressure within the breather air collection system that draws air and entrained oil through the deoiler.

In a further embodiment of any of the foregoing aircraft propulsion systems, the capture device includes a catalytic device for removing an additional amount of oil from an airflow.

In a further embodiment of any of the foregoing aircraft propulsion systems, the capture device includes an oil separation device for removing an additional amount of oil from the airflow.

In a further embodiment of any of the foregoing aircraft propulsion systems, the capture device includes an electrostatic device for removing an additional amount of oil from the airflow.

In a further embodiment of any of the foregoing aircraft propulsion systems, the capture device includes a porous or liquid media scrubber for removing an additional amount of oil from the airflow.

In a further embodiment of any of the foregoing, the aircraft propulsion system further includes a gearbox that is coupled to a fan and driven by the turbine section. The gearbox is in communication with the deoiler such that air with entrained oil from the gearbox is communicated to the deoiler.

In a further embodiment of any of the foregoing aircraft propulsion systems, the breather air collection system is in communication with at least one engine component in addition to the bearing system.

A lubrication system for an aircraft turbine engine according to an exemplary embodiment of this disclosure, among other possible things includes a bearing chamber that defines an enclosed space around a bearing member to which a lubricant is communicated for lubricating the bearing member, at least one air seal that controls a leakage flow into the bearing chamber, the air seal includes a carbon seal that is in sealing contact with a rotating engine shaft, and a breather air collection system is in communication with the enclosed space of the bearing chamber. The breather air collection system includes a deoiler for removing entrained lubricant from air that is exhausted from the bearing chamber.

In a further embodiment of the foregoing, the lubrication system further includes a collection system where lubricant from the bearing system is gathered and communicated to a lubricant tank. The collection system includes a lubricant pump for pumping lubricant that is drained from the bearing system.

In a further embodiment of any of the foregoing lubrication systems, the breather air collection system further includes at least one breather passage for communicating collected breather air from the bearing chambers through a core flow path.

In a further embodiment of any of the foregoing lubrication systems, the breather air collection system further includes a breather pump that is in communication with the deoiler for communicating oil that is collected in the deoiler to an oil capture device. The breather pump is configured to generate a vacuum to provide a negative pressure within the breather air collection system that draws air and entrained oil through the deoiler.

In a further embodiment of any of the foregoing lubrication systems, the capture device includes a catalytic device for removing an additional amount of lubricant from the air exhausted from the bearing chamber.

In a further embodiment of any of the foregoing lubrication systems, the capture device includes a second oil separation device for removing an additional amount of lubricant from the air exhausted from the bearing chamber.

In a further embodiment of any of the foregoing lubrication systems, the capture device includes an electrostatic device for removing an additional amount of lubricant from the air exhausted from the bearing chamber.

In a further embodiment of any of the foregoing lubrication systems, the capture device includes a porous or liquid media scrubber for removing an additional amount of oil from the air exhausted from the bearing chamber.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system.
Figure 2 is a schematic view of an example lubrication system for an aircraft gas turbine engine.
Figure 3 is an enlarged schematic view of a portion of the example lubrication system.
Figure 4 is a schematic view of an example low flow shaft seal.
Figure 5 is a schematic view of another example lubrication system.

### DETAILED DESCRIPTION

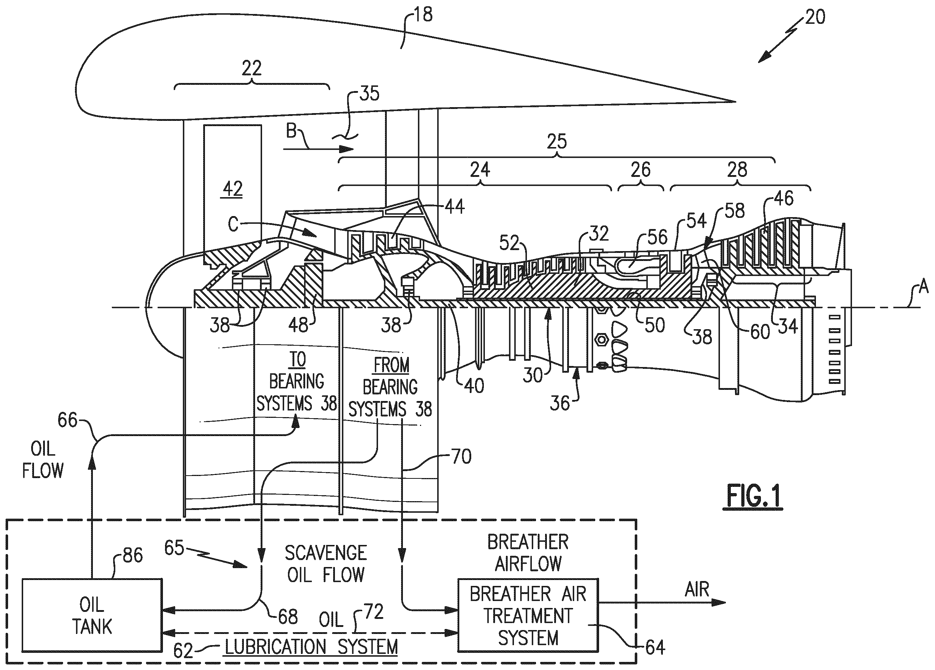

Figure 1 schematically illustrates an aircraft propulsion system 20 including a core engine 25 including a lubrication system with a breather air collection system that includes features for separating and collecting entrained oil to reduce or prevent oil exhausted from an aircraft.

The example propulsion system 20 is disclosed as a two-spool turbofan that generally incorporates a fan section 22 and a core engine 25 that generates an exhaust gas flow for driving the fan section 22. The core engine 25 includes a compressor section 24, a combustor section 26, and a turbine section 28. The fan section 22 may include a single-stage fan having a plurality of fan blades 42. The fan blades 42 may have a fixed stagger angle or may have a variable pitch to direct incoming airflow from an engine inlet. The fan 22 drives air along a bypass flow path B in a bypass duct 35 defined within a nacelle 18, and also drives air along a core flow path C for compression and communication into the combustor section 26 then expansion through the turbine section 28.

Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures. The propulsion system 20 may incorporate a variable area nozzle for varying an exit area of the bypass flow path B and/or a thrust reverser for generating reverse thrust.

The exemplary core engine 25 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan section 22 through a speed change mechanism, which in one example is illustrated as a geared architecture 48 to drive the fan section 22 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan section 22 and low pressure compressor 44 through the geared architecture 48 such that the fan section 22 and low pressure compressor 44 are rotatable at a common speed. Although this application discloses geared architecture 48, its teaching may benefit direct drive engines having no geared architecture.

The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 58 includes airfoils 60 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor 44, or aft of the combustor section 26 or even aft of turbine section 28, and the fan section 22 may be positioned forward or aft of the location of gear system 48.

The fan section 22 may have at least 10 fan blades 42 but no more than 20 or 24 fan blades 42. In the disclosed examples, the fan section 22 may have between 12 and 18 fan blades 42, such as for example 14 fan blades 42. An exemplary fan size measurement is a maximum radius between the tips of the fan blades 42 and the engine central longitudinal axis A. The maximum radius of the fan blades 42 can be at least 40 inches, or more narrowly no more than 75 inches. For example, the maximum radius of the fan blades 42 can be between 45 inches and 60 inches, such as between 50 inches and 55 inches. Another exemplary fan size measurement is a hub radius, which is defined as distance between a hub of the fan section 22 at a location of the leading edges of the fan blades 42 and the engine central longitudinal axis A. The fan blades 42 may establish a fan hub-to-tip ratio, which is defined as a ratio of the hub radius divided by the maximum radius of the fan section 22. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages 34 having a row of rotatable airfoils. Each stage may include a row of vanes adjacent the rotatable airfoils.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0.

The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan section 22. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0.

The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 62 at an axial position corresponding to a leading edge of the splitter 66 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5} (where °R = K x 9/5). The corrected fan tip speed can be less than or equal to 1150.0 ft / second (350.5 meters/second), and can be greater than or equal to 1000.0 ft / second (304.8 meters/second). Although an example fan tip speed is disclosed by way of example, other fan tip and fan speeds are within the contemplation and scope of this disclosure.

The fan section 22, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 68 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In one example embodiment, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In one example embodiment, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F). The TET may be greater than or equal to 2700.0 °F (1482.2 °C), or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8 °C), or more narrowly greater than or equal to 800.0 °F (426.7 °C), such as between 900.0 °F (482.2 °C) and 975.0 °F (523.9 °C). The relatively low EGT can be utilized in combination with the other techniques disclosed herein to reduce fuel consumption.

The inner shaft 40 and the outer shaft 50 are supported for rotation about the engine axis A by the bearing systems 38. A lubrication system 62 provides for the circulation and recovery of oil to each of the bearing systems 38. The bearing systems 38 receive an oil flow 66 from a lubrication system 66. Oil is circulated through the bearing systems 38 and recovered through a scavenge system 65 as scavenged oil flow 68 that is routed back to an oil tank 86.

An elevated pressure surrounding the bearing systems 38 provides for maintaining oil within the bearing systems 38. The elevated pressure may result in a leakage airflow into the bearing systems 38. An air breather system 64 or the scavenge system 65 provides for the removal of the leakage airflow from within each of the bearings systems 38.

The leakage airflow is either removed from the bearing system 38 mixed with the oil (via the oil scavenge system) or through a separate and dedicated breather air system on communication with the same bearing system 38. The leakage airflow will have entrained oil, even though the design intent is to draw only air. The scavenge oil flow 68 includes some air and transports that air back to the oil tank 86 or to a separating device, such as, for example, a deoiler. The air separated from the scavenge oil flow 68 is then communicated into the breather airflow for processing by the breather air treatment system 64.

Dedicated breather Air 70 exhausted from the bearing systems 38 includes some amount of entrained oil. Accordingly, the lubrication system 62 includes a breather air treatment system 64 for removing entrained oil from the air 70 prior to exhausting the air. The removed oil may be communicated back to the oil tank 86 as indicated by flow 72. Not all oil is removed and therefore some oil may be exhausted with the air. The example bearing systems 38 and breather air treatment system 64 include featured for further reducing the amount of oil that remains within the exhausted air.

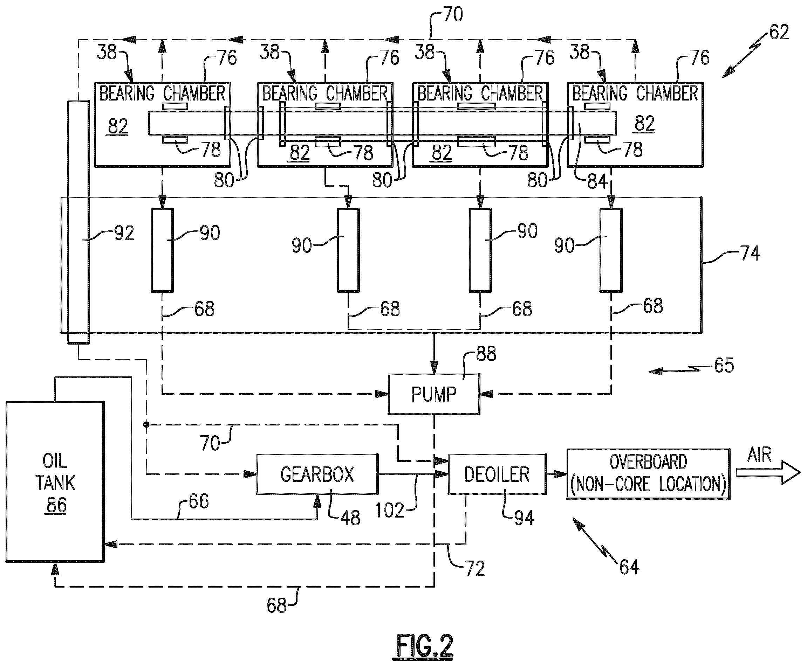

Referring to Figure 2 with continued reference to Figure 1, the example lubrication system 62 is shown schematically along with bearing systems 38 and a rotating engine shaft 84. The example rotating engine shaft 84 may be the inner shaft 40, the outer shaft 50, or some other rotating engine shaft that is supported for rotation by a bearing system 38. Each of the bearing systems 38 includes a bearing member 78 that is disposed within an enclosed space 82 defined by a bearing chamber 76. Lubricant 66 is supplied to each of the bearing chambers 76 to lubricate the bearing member 78 at the interface with the rotating engine shaft 84. The oil flow into the bearing chambers 76 may also be used to cool shaft seals 80.

Oil is circulated through each bearing chamber 76 to maintain a desired temperature of each bearing member 78 and to provide lubrication to mechanical interfaces such as the bearings, shaft seals and gears. An out flow of oil in the form of a scavenge oil flow 68 is captured by the scavenge system 65 and communicated though at least one of a plurality of scavenge oil passages 90. The scavenge oil passages 90 may pass through a core flow path that is schematically indicated at 74. The core flow path 74 is exposed to elevated temperatures and pressures and therefore the passages 90 includes features that accommodate the core flow path environment.

Scavenge oil flow 68 is accumulated and routed to a scavenge pump 88. Although a single scavenge pump 88 is shown, additional scavenge pumps 88 may be utilized within the scope and contemplation of this disclosure. The scavenge pump 88 communicates the scavenged oil back to the oil tank 86 for recirculation. The example scavenge passages 90 and scavenge pump 88 are shown schematically as part of a scavenge oil recovery system that may further include conduits, manifolds, valves, filters along with other components necessary to maintain a desired level of oil quality and flow. This scavenge flow additionally will transport seal leakage air from the bearing chambers 76 in parallel to the breather system 64.

A shaft seal 80 controls leakage airflow into the bearing chambers 76 and provides the seal between the fixed changer 76 and the rotating shaft 84. The example shaft seal may comprise a carbon seal in sealing contact with the rotating engine shaft 84. Contact between the static carbon seal and the rotating shaft 84 provides a low leakage seal. Other seal configurations may be utilized within the scope of this disclosure.

Even with the shaft seals 80, some air leaks into each bearing chamber 76. The air leaking into the chamber 76 is exhausted as the airflow 70 through a passage 92. Although a single passage 92 is shown schematically, many passages 92 may be utilized and are within the contemplation and scope of this disclosure.

Airflow 70 exhausted from the bearing chamber 76 includes some entrained oil and is therefore routed to a deoiler 94. The airflow 70 may be routed through other components that may add additional entrained oil to the airflow 70. In one example embodiment, the airflow 70 may be communicated to the gearbox 48. In the gearbox 48, additional entrained oil is accumulated and communicated as a second entrained airflow 102 that is also communicated to the deoiler 94. In this disclosed example the entrained airflows 70, 102 are communicated to a single location in the deoiler for treatment and oil recovery.

In the deoiler 94, oil is separated and returned to the oil tank 86 as the flow 72. The cleaner air may then be directed away from the engine 20. The deoiler 94 may be of any configuration that provides for the separation of air and oil. Moreover, although a single deoiler 94 is shown by way of example, multiple deoilers 94 may be used and are within the contemplation and scope of this disclosure.

Oil not recovered in the deoiler 94 is lost and reduces the amount of oil available to support engine operation. The amount of oil lost increases/decreases with the amount of leakage breather airflow 70. Minimization of the amount of oil that remains within the air after the deoiler 94 may be accomplished by reducing the amount of air that is exhausted from each of the bearing chambers 76. Reducing the volume of airflow of air exhausted from each chamber 76 is accomplished by reducing the volume of airflow that leaks into each of the chambers 76.

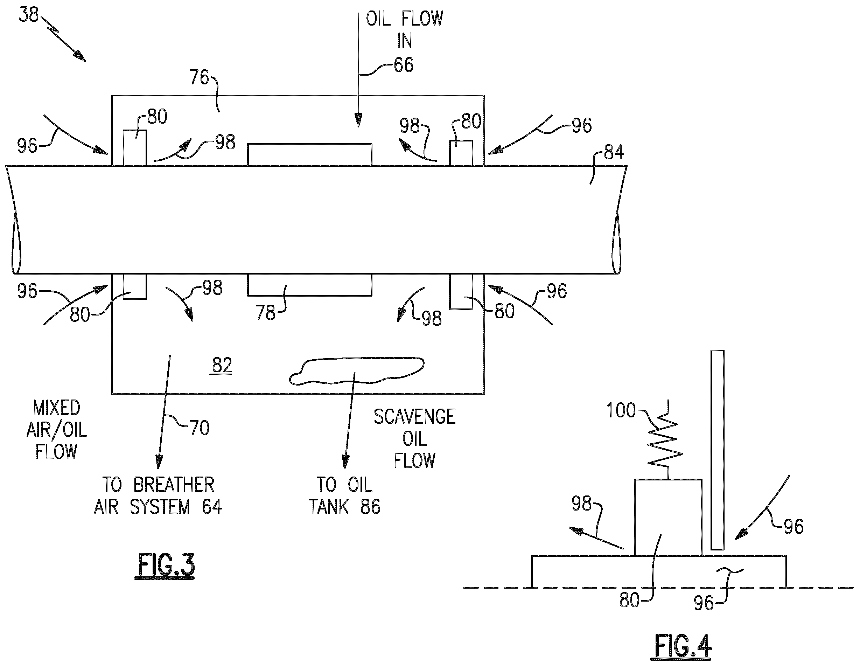

Referring to Figures 3 and 4, with continued reference to Figure 2, in one example bearing system embodiment, low leakage shaft seals 80 are provided to control and reduce the amount of leakage airflow that leaks into each chamber 76. In one example embodiment, airflow 96 around an exterior of each chamber 76 results in a reduced amount of leakage airflow 98 that leaks past the shaft seals 80.

The example shaft seals 80 comprise a carbon seal 80 that is biased into contact with the rotating shaft 84 by a biasing member 100. Reduced airflow or reduced pressure outside of the chamber 76 results in a reduced amount of leakage airflow indicated at 98. The reduced leakage airflow 98 reduces the volume of the mixed oil and air 70 that is exhausted to the breather air treatment system 64. The reduced flow 70 results in a reduced amount of airflow that must be treated for separation of oil. Moreover, the reduction in leakage flow reduces the amount of oil that needs to be separated that enables the efficient treatment and removal of oil. Higher leakage flows may overwhelm any oil recovery or separation devices and therefore the reduced leakage flows enable better separation efficiencies.

The amount of air leakage flow is primarily set by the type of shaft seal and the pressure differential across that seal. A lower pressure differential is desirable, but not always attainable given other system architecture limitations. Low leakage seals are thus beneficial in reducing air flow in both high and low pressure differential applications. Low leakage seals are physically contacting seals with a sliding interface, or may have a clearance that is set dynamically by the rotor movement and airflow through the seal. In practice, fixed clearance seals such as knife edge or labyrinth seals result in leakage areas that may be an order of magnitude larger than contacting or dynamic seals. Some 'dynamic' ring seals are thermally controlled but are non-contacting, resulting in larger leakage areas similar to fixed clearance seals.

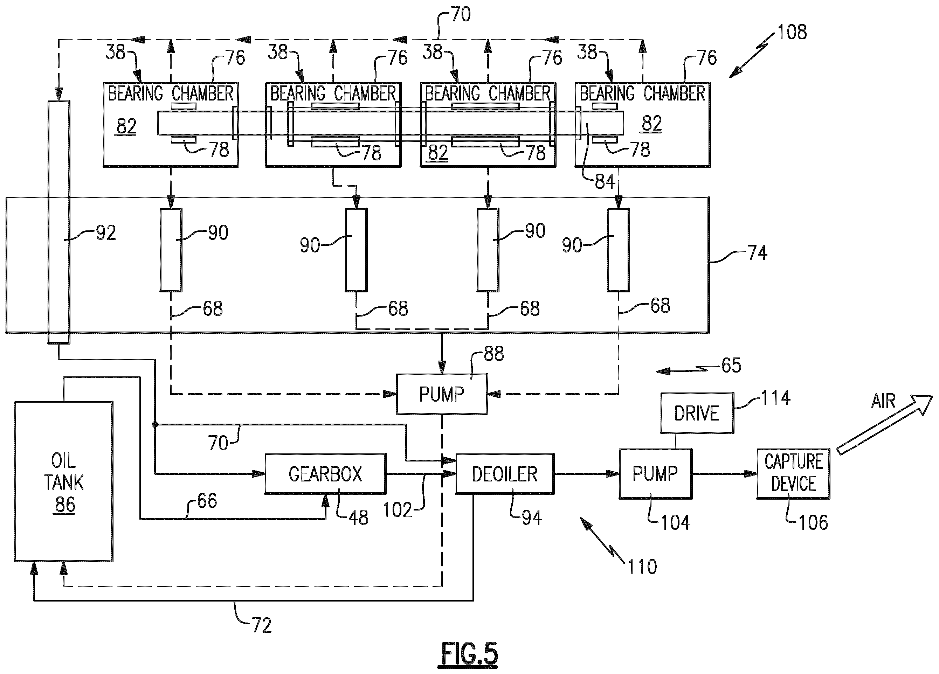

Referring to Figure 5, another example lubrication system 108 with another example air breather treatment system 110 is schematically shown and includes a breather pump 104 in communication with the deoiler 94 for communicating oil collected in the deoiler 94 to an oil capture device 106. The breather pump 104 is configured to generate a vacuum to provide a negative pressure within the breather air collection system 110 that draws air 112 from the deoiler 94 for further separation and processing.

The breather airflow 70 is typically at a low pressure and low flow. The low pressures and flows may result in back pressure and/or accumulation of debris that inhibits efficient flow to the treatment and separation devices. Because a single point of collection in the deoiler 94 is provided, the breather pump 104 can pressurize the low volume, low pressure discharge airflow 70 and distribute it to the capture device 106.

In one disclosed example, the breather pump 104 is driven by a drive device 114. In one example embodiment, the drive device 114 is an electric motor. In another example embodiment, the drive device 114 is a mechanical coupling to a rotating engine shaft. The drive device 114 may be of other configurations that are useful for driving the pump 104. Moreover, the breather pump 104 may be variably operated to adjust to engine operating conditions.

Accordingly, instead of exhausting air directly from the deoiler 94, the airflow 112 is drawn through the pump 104 and directed to the capture device 106. Oil separated in the deoiler 94 is communicated as the oil flow 74 back to the tank 86. The airflow 112 contains a substantially reduced amount of entrained oil that is further processed in the capture device 106. The breather pump 104 provides for the capture and transport of air with entrained oil to any location outside of the engine 20 for further processing, capture, and storage. Locations outside of the engine are advantageous because of the additional resources available in the form of larger storage or processing volumes, or additional systems that may not be packageable on the engine directly.

The capture device 106 provides further separation of oil prior to exhausting air away from the engine. In another example embodiment, the capture device 106 traps oil from the airflow 112 to prevent exhausting oil away from the engine 20.

In one disclosed example, the capture device 106 comprises a catalyst for removing and trapping an additional amount of oil from the airflow 112. In another disclosed example embodiment, the capture device 106 is a second oil mechanical separation device for removing an additional amount of oil from the airflow 112.

In another disclosed embodiment, the capture device 106 provides for electrostatic separation of oil droplets from the air stream. In yet another disclosed embodiment, the capture device 106 pumps air with entrained oil droplets through a porous or liquid media that traps oil droplets. The capture device (106) may be mounted away from the engine and within an aircraft structure to enable the use of larger areas of filtration media. Moreover, the away from engine mounting enables other methods of separation that may not be practical if mounted to the engine. The pump 104 may also be mounted outside of the engine to further mitigate flow restrictions that may be present at locations within the core engine 25.

Accordingly, the disclosed lubrication system includes features for reducing oil losses and oil exhausted from an aircraft propulsion system.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An aircraft propulsion system (20) comprising:
a compressor section (24), a combustor (56) and a turbine section (28) arranged along an axis (A) and defining a core flow path (74) where a compressed inlet airflow from the compressor section (24) is mixed with fuel in the combustor (56) and ignited to generate an exhaust gas flow that is expanded through the turbine section (28) to drive at least one engine shaft (84) rotatable about the axis (A);
at least one bearing system (38) comprising a bearing member (78) supporting rotation of the engine shaft (84), a bearing chamber (76) defining an enclosed space (82) around the bearing member (78) to which a lubricant is communicated for lubricating the bearing member (78);
at least one air seal (80) that control a leakage flow (72) into the bearing chamber (76), wherein the air seal (80) comprises a carbon seal in sealing contact with the rotating engine shaft (84); and
a breather air collection system (64; 110) in communication with the enclosed space (82) of the bearing chamber (76), wherein the breather air collection system (64; 110) comprises a deoiler (94) for removing entrained lubricant from the air.

2. The aircraft propulsion system (20) as recited in claim 1, further comprising an oil scavenge system (65) where lubricant from the bearing system (38) is gathered and communicated to a lubricant tank (86), wherein the oil scavenge system (65) comprises a lubricant pump (88) for pumping lubricant drained from the bearing system (38).

3. The aircraft propulsion system (20) as recited in claim 1 or 2, wherein the air seals (80) comprise a low airflow seal that comprises a static element contacting a rotating element.

4. The aircraft propulsion system (20) as recited in claim 1, 2 or 3, wherein the breather air collection system (64; 110) further comprises at least one breather passage for communicating collected breather air from the bearing chambers (76) to the core flow path (74).

5. The aircraft propulsion system (20) as recited in claim 4, wherein the breather air collection system (110) further comprises a breather pump (104) in communication with the deoiler (94) for communicating oil collected in the deoiler (94) to an oil capture device (106).

6. The aircraft propulsion system (20) as recited in claim 5, wherein the breather pump (104) is configured to generate a vacuum to provide a negative pressure within the breather air collection system (110) that draws air and entrained oil through the deoiler (94).

7. The aircraft propulsion system (20) as recited in claim 5 or 6, wherein the capture device (106) comprises a catalytic device for removing an additional amount of oil from an airflow.

8. The aircraft propulsion system (20) as recited in claim 5 or 6, wherein the capture device (106) comprises an oil separation device for removing an additional amount of oil from the airflow.

9. The aircraft propulsion system (20) as recited in claim 5 or 6, wherein the capture device (106) comprises an electrostatic device for removing an additional amount of oil from the airflow.

10. The aircraft propulsion system (20) as recited in claim 5 or 6, wherein the capture device (106) comprises a porous or liquid media scrubber for removing an additional amount of oil from the airflow.

11. The aircraft propulsion system (20) as recited in any preceding claim, further comprising a gearbox (48) for coupled to a fan (22) and driven by the turbine section (28), wherein the gearbox (48) is in communication with the deoiler (94) such that air with entrained oil from the gearbox (48) is communicated to the deoiler (94).

12. The aircraft propulsion system (20) as recited in any preceding claim, wherein the breather air collection system (64; 110) is in communication with at least one engine component in addition to the bearing system (38).

13. A lubrication system (62; 108) for an aircraft turbine engine (20) comprising:
a bearing chamber (76) defining an enclosed space (82) around a bearing member (78) to which a lubricant is communicated for lubricating the bearing member (78);
at least one air seal (80) that control a leakage flow (72) into the bearing chamber (76), wherein the air seal (80) comprises a carbon seal in sealing contact with a rotating engine shaft (84); and
a breather air collection system (110) in communication with the enclosed space (82) of the bearing chamber (76), wherein the breather air collection system (64; 110) comprises a deoiler (94) for removing entrained lubricant from air exhausted from the bearing chamber (76).

14. The lubrication system (62; 108) as recited in claim 13, further comprising a collection system where lubricant from the bearing system (38) is gathered and communicated to a lubricant tank (86), wherein the collection system comprises a lubricant pump (88) for pumping lubricant drained from the bearing system (38).

15. The lubrication system (62; 108) as recited in claim 14, wherein the breather air collection system (64; 110) further comprises at least one breather passage for communicating collected breather air from the bearing chambers (76) through a core flow path (74),
wherein, optionally, the breather air collection system (110) further comprises a breather pump (104) in communication with the deoiler (94) for communicating oil collected in the deoiler (94) to an oil capture device (106), wherein the breather pump (104) is configured to generate a vacuum to provide a negative pressure within the breather air collection system (110) that draws air and entrained oil through the deoiler (94),
wherein, further optionally, the capture device (106) comprises:
a catalytic device for removing an additional amount of lubricant from the air exhausted from the bearing chamber (76); or
a second oil separation device for removing an additional amount of lubricant from the air exhausted from the bearing chamber (76); or
an electrostatic device for removing an additional amount of lubricant from the air exhausted from the bearing chamber (76); or
a porous or liquid media scrubber for removing an additional amount of oil from the air exhausted from the bearing chamber (76).
